# EUROPEAN PATENT APPLICATION

(11) **EP 4 437 861 A1**
(43) Date of publication of application: **02.10.2024**
(21) Application number: 21965574.3
(22) Date of filing: 24.11.2021
(51) Int. Cl.: A24C 5/34, A24D 3/02

(54) **INSPECTION DEVICE FOR TUBULAR CONTINUOUS OBJECT AND INSPECTION METHOD**

(71) Applicant: Japan Tobacco Inc., Tokyo 105-6927 (JP)
(72) Inventor: TANAKA, Jumpei, Tokyo 130-8603 (JP); IMANAGA, Hiroshi, Tokyo 130-8603 (JP)
(74) Representative: Hoffmann Eitle
(86) International application number: PCT/JP2021/042969
(87) International publication number: WO 2023/095200

(57) **Abstract**

An inspection device 40 is for inspecting, at a conveyance section, a tubular continuous object 24 to serve as a tubular element 4 for a flavor inhalation article 1. The tubular continuous object 23 is a double-layer tube that has an overlapping portion 30, a joint adhesion portion 32, and an abutting portion 34. The inspection device 40 includes a camera 42 that performs image-capturing of the tubular continuous object 24 from a head-on position of the abutting portion 34, an illumination 44 that illuminates the abutting portion 34 from an illumination direction that intersects an image-capturing direction of the camera 42 by an angle α that is no greater than 90 degrees, an image processing unit 48 that performs processing of images image-captured by the camera 42, and detects a shadow 52 of the abutting portion 34 that extends in an axial direction X of the tubular continuous object 24, and a determining unit 50 that determines quality of the tubular continuous object 24, on the basis of the shadow 52 detected by the image processing unit 48.

## Description

### Technical Field

The present invention relates to an inspection device and an inspection method for a tubular continuous body, and more specifically, to an inspection device and an inspection method for inspecting, in a transport process, a tubular continuous body serving as a tubular element of a flavor inhalation article.

### Background Art

PTL 1 discloses a tubular continuous body made of double web materials that are an inner web and an outer web. With a manufacturing device described in PTL 1, a serial tubular continuous body is first formed, the tubular continuous body is cut into tubular rods in a transport section, an attachment process is performed to further connect other elements, and the tubular rod is further cut, thereby forming a tubular element constituting a flavor inhalation article.

The tubular continuous body is a double tube including an overlapping portion where the inner web and the outer web are bonded together with a shift in a circumferential direction, a seam bonding portion where an inner circumferential edge portion that is a region other than the overlapping portion on the inner circumferential surface of the outer web and an outer circumferential edge portion that is a region other than the overlapping portion on the outer circumferential surface of the inner web are bonded together while overlapping each other, and an abutting portion that adjoins the seam bonding portion and where both ends of the outer web in the circumferential direction abut against each other.

### Citation List

### Patent Literature

PTL 1: European Patent Application Publication No. 3033952

### Summary of Invention

### Technical Problem

On the outer circumferential surface of a normal tubular continuous body, the abutting portion appears as an ultrathin straight line in an axial direction. However, the paper widths of the inner web and the outer web may have variations or a small bonding misalignment may occur when the overlapping portion and the seam bonding portion are formed. In those cases, the width of the abutting portion increases and glue projecting off the seam bonding portion adheres to the abutting portion and its vicinity.

The glue adhering to the abutting portion and its vicinity is cured into glue scum to soil the tubular continuous body. Further, fine powder of the web material generated along with the manufacture of the tubular continuous body or dust in the air may adhere to and be cured on the glue adhering to the abutting portion and its vicinity to soil the tubular continuous body.

Further, the outer web may be bonded insufficiently at the seam bonding portion to cause a so-called burst state of the tubular continuous body in which one end of the outer web around the abutting portion is curled up. Those defects deteriorate the quality of the tubular continuous body, the tubular rod, the tubular element, and furthermore the flavor inhalation article. In a case where the tubular rod or the tubular element is inspected for those defects, the inspection efficiency significantly decreases and the productivity of the flavor inhalation article decreases. Therefore, there is a demand to detect and reject a defective product by inspection at the stage of the tubular continuous body.

The present invention has been made in view of such problems, and has an object to provide an inspection device and an inspection method for a tubular continuous body in which the quality of the tubular continuous body can be improved by efficient inspection.

### Solution to Problem

To achieve the above object, an inspection device for a tubular continuous body according to one aspect is an inspection device that inspects a tubular continuous body serving as a tubular element of a flavor inhalation article in a transport section. The tubular continuous body is a double tube including an overlapping portion where an inner web and an outer web are bonded together with a shift in a circumferential direction, a seam bonding portion where an inner circumferential edge portion that is a region other than the overlapping portion on an inner circumferential surface of the outer web and an outer circumferential edge portion that is a region other than the overlapping portion on an outer circumferential surface of the inner web are bonded together while overlapping each other, and an abutting portion that adjoins the seam bonding portion and where both ends of the outer web in the circumferential direction abut against each other. The inspection device includes: a camera that captures an image of the tubular continuous body at a facing position toward the abutting portion; an illuminator that illuminates the abutting portion in an illumination direction intersecting an image capturing direction of the camera at an angle equal to or smaller than 90°; an image processor that processes the image captured by the camera and detects a shade of the abutting portion extending in an axial direction of the tubular continuous body; and a determiner that determines, based on the shade detected by the image processor, whether the tubular continuous body is good or defective.

Further, an inspection method for a tubular continuous body according to one aspect is an inspection method for inspecting a tubular continuous body serving as a tubular element of a flavor inhalation article in a transport section. The tubular continuous body is a double tube including an overlapping portion where an inner web and an outer web are bonded together with a shift in a circumferential direction, a seam bonding portion where an inner circumferential edge portion that is a region other than the overlapping portion on an inner circumferential surface of the outer web and an outer circumferential edge portion that is a region other than the overlapping portion on an outer circumferential surface of the inner web are bonded together while overlapping each other, and an abutting portion that adjoins the seam bonding portion and where both ends of the outer web in the circumferential direction abut against each other. The inspection method includes: an image capturing step for capturing an image of the tubular continuous body at a facing position toward the abutting portion; an illumination step for illuminating the abutting portion in an illumination direction intersecting an image capturing direction in the image capturing step at an angle equal to or smaller than 90°; an image processing step for processing the image captured in the image capturing step and detecting a shade of the abutting portion extending in an axial direction of the tubular continuous body; and a determination step for determining, based on the shade detected in the image processing step, whether the tubular continuous body is good or defective.

### Advantageous Effects of Invention

The tubular continuous body can be inspected efficiently, and the quality of the tubular continuous body can be improved.

### Brief Description of Drawings

[Fig. 1] Fig. 1 is a lateral sectional view of a flavor inhalation article.
[Fig. 2] Fig. 2 is a vertical sectional view of a tubular element.
[Fig. 3] Fig. 3 is a sectional view of a double web when the tubular element is developed in a radial direction.
[Fig. 4] Fig. 4 is a schematic diagram of an inspection device for a tubular continuous body.
[Fig. 5] Fig. 5 is a side view of the tubular continuous body.
[Fig. 6] Fig. 6 illustrates an inspection flow of the inspection device.
[Fig. 7] Fig. 7 is a diagram for describing step S31 and step 41 in the inspection flow on the side surface of the tubular continuous body.
[Fig. 8] Fig. 8 illustrates an example of a captured image when determination is made to indicate "defective" in the inspection described in Fig. 7.
[Fig. 9] Fig. 9 is a diagram for describing step S32 to step 34 and step 42 in the inspection flow on the side surface of the tubular continuous body.
[Fig. 10] Fig. 10 illustrates an example of a captured image when determination is made to indicate "defective" in the inspection described in Fig. 9.
[Fig. 11] Fig. 11 illustrates another example of the captured image of Fig. 10.
[Fig. 12] Fig. 12 illustrates another example of the captured image of Fig. 10.
[Fig. 13] Fig. 13 illustrates another example of the captured image of Fig. 10.
[Fig. 14] Fig. 14 is a diagram for describing step S35 to step 37 and step 43 in the inspection flow on the side surface of the tubular continuous body.
[Fig. 15] Fig. 15 illustrates an example of a captured image when determination is made to indicate "defective" in the inspection described in Fig. 14.
[Fig. 16] Fig. 16 illustrates another example of the captured image of Fig. 15.

### Description of Embodiments

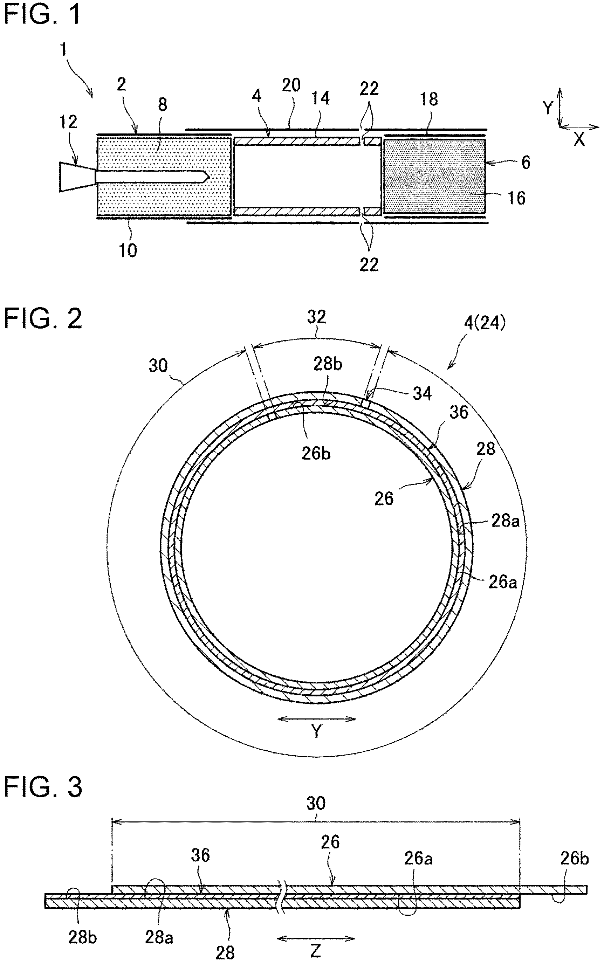

Fig. 1 is a lateral sectional view of a flavor inhalation article 1 (hereinafter referred to also as "article"). The article 1 includes a flavor element 2, a tubular element 4, and a filter element 6 in this order from the left side in Fig. 1 (distal end side of the article 1). The flavor element 2 is formed by filling with a flavor raw material 8. The circumferential surface of the flavor raw material 8 is wrapped with wrapping paper 10. The article 1 may be of a non-combustion-heating type or a combustion-heating type.

In a case where the article 1 is of the non-combustion-heating type, as illustrated in Fig. 1, a device to be used for heating the flavor element 2 (flavor inhaler) includes, for example, a needle-shaped heater 12. Fig. 1 illustrates only the heater 12 of the device. The article 1 is set on the device and the flavor element 2 is heated by inserting the heater 12 thereto. In a case where the article 1 is of the combustion-heating type, the flavor element 2 is lit. Thus, the flavor component of the flavor raw material 8 is vaporized in the article 1.

In the case where the article 1 is of the non-combustion-heating type, the flavor raw material 8 is, for example, shredded tobacco, an object obtained by shredding a tobacco sheet, or an object obtained by folding a tobacco sheet into gathers. The flavor raw material 8 may be an object obtained by adding a flavoring agent to a sheet made of pulp that does not contain tobacco, an object obtained by shredding a sheet made of a non-tobacco plant, or an object obtained by folding those sheets into gathers.

The tubular element 4 forms an airflow path in the article 1 and is made of a paper tube 14 having a cylindrical shape. The paper tube 14 is made of a double paper web. The tubular element 4 cools the flavor component volatilized in the flavor element 2 by heating to obtain an aerosol. The filter element 6 is a filter filled with a filling material 16. The circumferential surface of the filter element 6 is wrapped with wrapping paper 18. The elements 2, 4, and 6 are coaxially arranged in an axial direction X of the article 1 to abut against each other, thereby forming a continuous body.

The elements 2, 4, and 6 are connected together by wrapping tipping paper 20 on the circumferential surface of the continuous body. In the tubular element 4 and the tipping paper 20, air passage holes 22 for taking air into the article 1 during inhalation from the article 1 are open in a radial direction Y of the article 1. Air taken into the article 1 from the outside through the air passage holes 22 cools the flavor component in the flavor element 2 and volatilized components of additives added to the tubular element 4 and the filter element 6, thereby promoting aerosolization of those components.

Fig. 2 is a vertical sectional view of the tubular element 4 and Fig. 3 is a sectional view of a double web when the tubular element 4 is developed in the radial direction Y With the publicly known manufacturing device described above in PTL 1 (EP 3033952 A2), a serial tubular continuous body 24 is first formed, the tubular continuous body 24 is cut into tubular rods in a transport section of the manufacturing device, an attachment process is performed to further connect other elements, and the tubular rod is further cut, thereby forming the tubular element 4 constituting the article 1. That is, Fig. 2 also illustrates the vertical cross section of the tubular continuous body 24.

The tubular continuous body 24 is a double tube formed from double paper webs that are an inner web 26 and an outer web 28, and includes an overlapping portion 30, a seam bonding portion 32, and an abutting portion 34. The overlapping portion 30 is a portion where the inner web 26 and the outer web 28 are bonded together using a bonding portion 36 with a shift in a circumferential direction in Fig. 2 (width direction Z in Fig. 3).

The seam bonding portion 32 is a portion where an inner circumferential edge portion 28b that is a region other than the overlapping portion 30 on an inner circumferential surface 28a of the outer web 28 and an outer circumferential edge portion 26b that is a region other than the overlapping portion 30 on an outer circumferential surface 26a of the inner web 26 are bonded together while overlapping each other. The abutting portion 34 is a portion that adjoins the seam bonding portion 32 and where both ends of the outer web 28 in the circumferential direction abut against each other.

In this way, the inner web 26 and the outer web 28 are placed with a positional shift in the width direction Z, and the double web including the overlapping portion 30, the inner circumferential edge portion 28b, and the outer circumferential edge portion 26b is curved and bonded at the seam bonding portion 32. Thus, as illustrated in Fig. 2, the tubular continuous body 24 is formed by bonding the inner web 26 and the outer web 28 at the seam bonding portion 32 without irregularities.

Thus, the circumferential surface of the tubular continuous body 24 is a smooth surface without irregularities, and the quality of the tubular element 4 is improved. Since the tubular element 4 is formed from the double web, the buckling strength of the tubular element 4 is increased and the function of the tubular element 4 as a support segment is enhanced compared with a case where the tubular element 4 is formed from a single web.

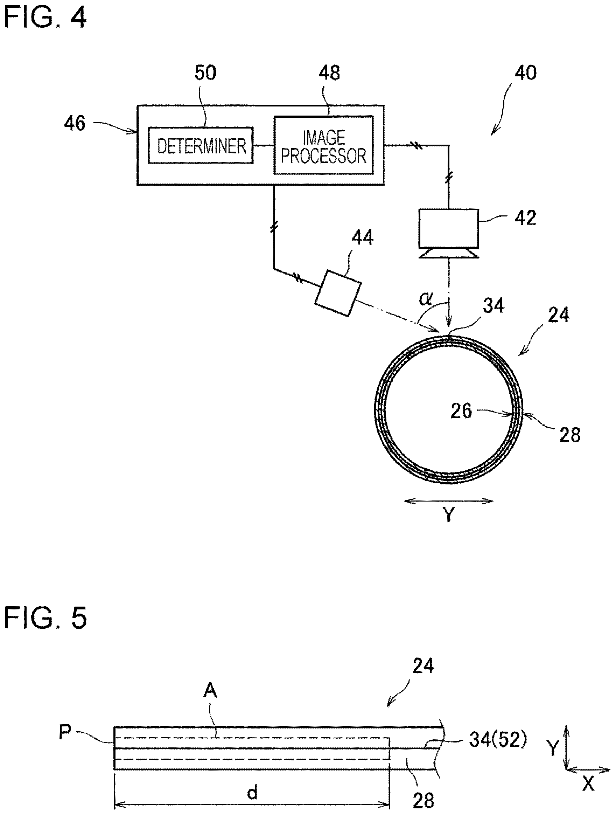

Fig. 4 is a schematic diagram of an inspection device 40 for the tubular continuous body 24. The inspection device 40 inspects, in a transport process, the tubular continuous body 24 transported in the transport section of the manufacturing device described above. The inspection device 40 includes a camera 42, an illuminator 44, and a control unit 46. The control unit 46 includes an image processor 48 and a determiner 50. The camera 42 is electrically connected to the control unit 46, and captures an image of the tubular continuous body 24 at a facing position toward the abutting portion 34.

The illuminator 44 is, for example, a white LED illuminator that is electrically connected to the control unit 46 and illuminates the abutting portion 34 in an illumination direction (represented by a two-dot chain line) intersecting an image capturing direction of the camera 42 (represented by a chain line) at an angle α equal to or smaller than 90°. The illuminator 44 may be supplied with electric power from an unillustrated power source without being connected to the control unit 46. Further, an unillustrated display unit may be provided to display an image captured by the camera 42.

Fig. 5 is a side view of the tubular continuous body 24. On the circumferential surface of the normal tubular continuous body 24, the abutting portion 34 appears as a straight line in the axial direction X. The illuminator 44 illuminates the abutting portion 34 in the illumination direction intersecting the image capturing direction of the camera 42 at the angle α equal to or smaller than 90° and, when the tubular continuous body 24 is normal, the abutting portion 34 is detected as a black or gray shade 52 having an ultrathin straight line shape in a monochrome image captured by the camera 42.

When the inspection of the tubular continuous body 24 is started, the control unit 46 outputs an image capturing start signal every predetermined period (e.g., 21 msec). Every time the output image capturing start signal is received, the camera 42 captures an image of the tubular continuous body 24 that is being transported. In the captured image transmitted from the camera 42, the image processor 48 sets an inspection region A having a predetermined distance d (e.g., 65 mm) in the axial direction X of the tubular continuous body 24. When an inspection start signal is received for the first time, the image processor 48 detects an end surface position P of the tubular continuous body 24 based on the captured image.

Based on the end surface position P, the image processor 48 corrects the position of the inspection region A to keep the distance d in the axial direction X of the inspection region A to be inspected next time onwards. By correcting the position of the inspection region A, the abutting portion 34 can securely be positioned in the inspection region A even if the tubular continuous body 24 is slightly displaced in the radial direction Y in the transport process to cause so-called rod runout. Thus, the tubular continuous body 24 can be inspected over the entire region in the axial direction X without missing the inspection points.

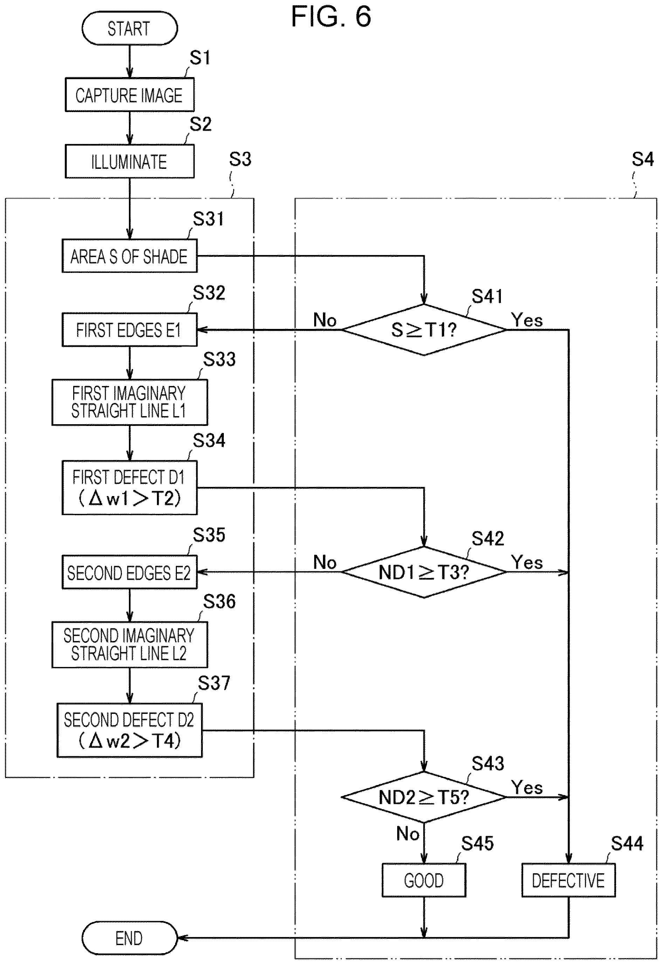

Fig. 6 illustrates an inspection flow of the inspection device 40. When the inspection of the tubular continuous body 24 is started, the camera 42 that has received the inspection start signal captures an image of the tubular continuous body 24 at the facing position toward the abutting portion 34, and transmits data on the captured image to the image processor 48 (image capturing step S 1). Further, the illuminator 44 illuminates the abutting portion 34 in the illumination direction intersecting the image capturing direction of the camera 42 at the angle α equal to or smaller than 90° at the same timing as that of the image capturing step S1 or in advance (illumination step S2).

Next, the image processor 48 processes the captured image transmitted from the camera 42, and detects the shade 52 of the abutting portion 34 extending in the axial direction X of the tubular continuous body 24 (image processing step S3). Next, the determiner 50 determines, based on the shade 52 detected by the image processor 48, whether the tubular continuous body 24 is good or defective (determination step S4). Step S31 to step S37 constituting the image processing step S3 and step S41 to step S45 constituting the determination step S4 are described below in detail.

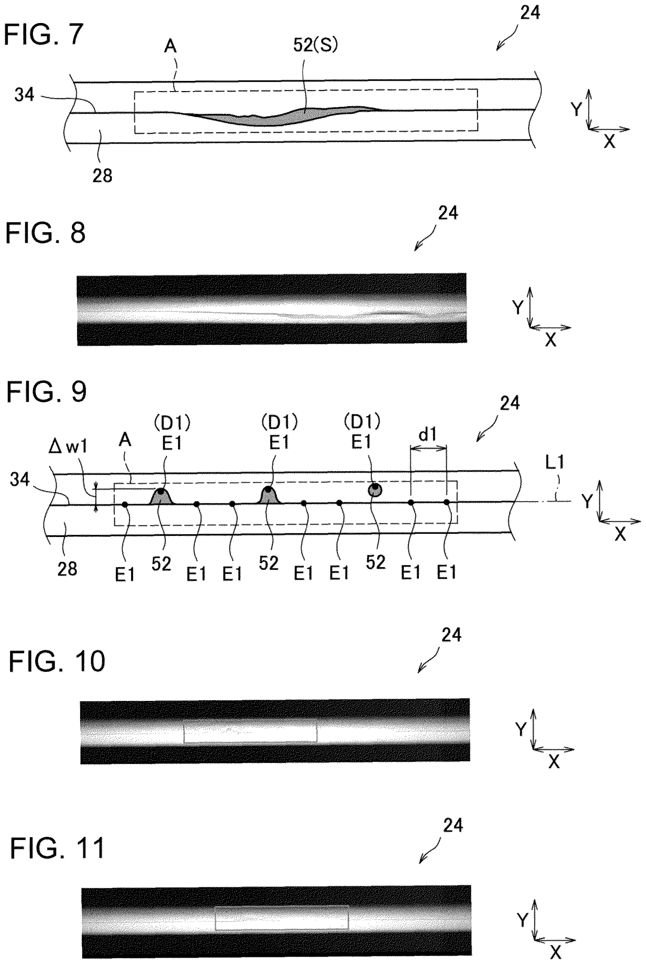

Fig. 7 is a diagram for describing step S31 and step 41 in the inspection flow on the side surface of the tubular continuous body. In step S31, an area S of the shade 52 is calculated and the process proceeds to step S41. In step S41, determination is made as to whether the area S of the shade 52 is equal to or larger than a predetermined first threshold T1. When the determination result is affirmative (Yes) and S ≥ T1 holds true, the process proceeds to step S44 to output information indicating that the tubular continuous body 24 is defective. Then, the inspection of the inspection region A to be inspected is terminated.

Fig. 8 illustrates an example of a captured image when determination is made to indicate "defective" in the inspection described in Fig. 7. In the abutting portion 34, a black or gray shade 52 expanding in the radial direction Y appears to meander in the axial direction X, and the area S of the shade 52 is equal to or larger than the first threshold T1. In this case, it is assumed that the outer web 28 is bonded insufficiently at the seam bonding portion 32 to cause a so-called burst state of the tubular continuous body 24 in which one end of the outer web 28 around the abutting portion 34 is curled up.

This defect deteriorates the quality of the tubular continuous body 24, the tubular rod, the tubular element 4, and furthermore the article 1. Therefore, the tubular continuous body 24 is rejected from the transport section of the manufacturing device for the tubular continuous body 24 as a defective product before the tubular continuous body 24 is formed into the tubular rod, the tubular element 4, and furthermore the article 1. When the determination result in step 41 is negative (No) and S ≥ T1 does not hold true, that is, the area S of the shade 52 is smaller than the first threshold T1, determination is made that there is a strong possibility that the burst state of the tubular continuous body 24 does not occur, and the process proceeds to step S32.

Fig. 9 is a diagram for describing step S32 to step 34 and step 42 in the inspection flow on the side surface of the tubular continuous body 24. In step S32, a plurality of first edges E1 located on the upper end side (one end side) of the shade 52 in the radial direction Y of the tubular continuous body 24 is detected with predetermined intervals d1 in the axial direction X. Next, in step S33, a first imaginary straight line L1 is created by linear approximation of the first edges E1.

Next, in step S34, a first edge E1 in which a deviation amount Δw1 in the radial direction Y between the first imaginary straight line L1 and the first edge E1 is larger than a predetermined second threshold T2, that is, Δw1 > T2 holds true, is identified as a first defect D 1. Next, in step S42, determination is made as to whether the number ND 1 of first defects D1 is equal to or larger than a predetermined third threshold T3. When the determination result is affirmative (Yes) and ND1 ≥ T3 holds true, the process proceeds to step S44 to output information indicating that the tubular continuous body 24 is defective. Then, the inspection of the inspection region A to be inspected is terminated.

Fig. 10 to Fig. 13 illustrate examples of a captured image when determination is made to indicate "defective" in the inspection described in Fig. 9. As indicated by boxes in the captured images of Fig. 10 to Fig. 13, a black or gray region is present in the vicinity of the upper side of the abutting portion 34 located at the center in the radial direction Y of the tubular continuous body 24. It is assumed that glue scum soils the tubular continuous body 24. It is also assumed that fine powder of the web material generated along with the manufacture of the tubular continuous body 24 or dust in the air may adhere to and be cured on the glue adhering to the vicinity of the upper side of the abutting portion 34 to soil the tubular continuous body 24.

Regarding this soil, determination is made to indicate "good" in step S41 because the area S of the shade 52 is not large enough to presume the burst state of the tubular continuous body 24. However, the tubular continuous body 24 having this defect is rejected from the transport section of the manufacturing device for the tubular continuous body 24 as a defective product as in the case of the inspection described in Fig. 7. When the determination result in step 42 is negative (No) and ND 1 ≥ T3 does not hold true, that is, the number ND 1 of first defects D1 is smaller than the third threshold T3, determination is made that no soil occurs in the vicinity of the upper side of the abutting portion 34 of the tubular continuous body 24 or the soil is in a permissible range, and the process proceeds to step S37.

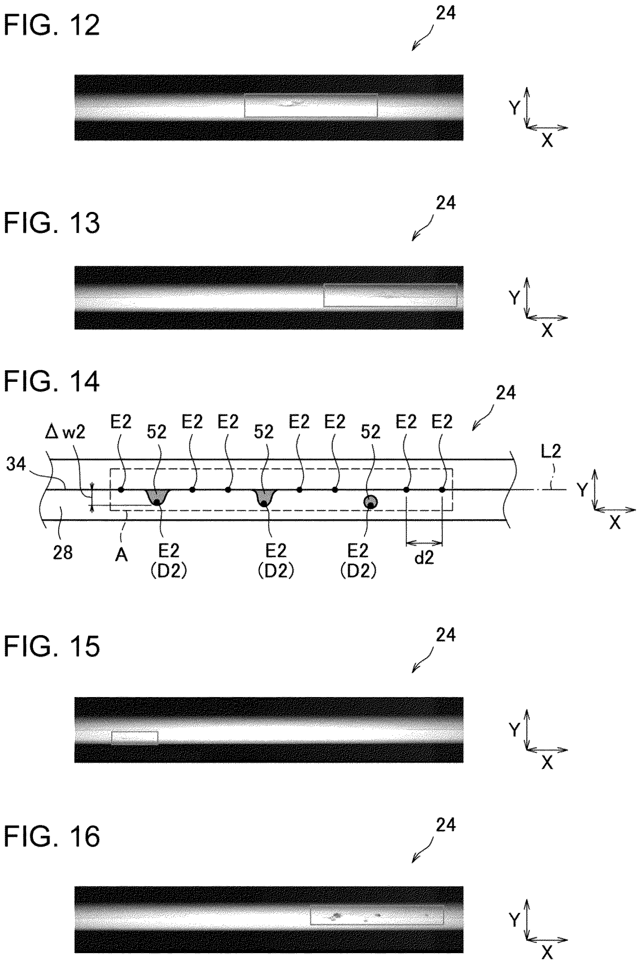

Fig. 14 is a diagram for describing step S35 to step 37 and step 43 in the inspection flow on the side surface of the tubular continuous body 24. In step S35, a plurality of second edges E2 located on the lower end side (other end side) of the shade 52 in the radial direction of the tubular continuous body 24 is detected with predetermined intervals d2 in the axial direction X. Next, in step S36, a second imaginary straight line L2 is created by linear approximation of the second edges E2.

Next, in step S37, a second edge E2 in which a deviation amount Δw2 in the radial direction Y between the second imaginary straight line L2 and the second edge E2 is larger than a predetermined second threshold T4, that is, Δw2 > T4 holds true, is identified as a second defect D2. Next, in step S43, determination is made as to whether the number ND2 of second defects D2 is equal to or larger than a predetermined fifth threshold T5. When the determination result is affirmative (Yes) and ND2 ≥ T5 holds true, the process proceeds to step S44 to output information indicating that the tubular continuous body 24 is defective. Then, the inspection of the inspection region A to be inspected is terminated.

Fig. 15 and Fig. 16 illustrate examples of a captured image when determination is made to indicate "defective" in the inspection described in Fig. 14. As indicated by a box in the captured image of Fig. 15, a black or gray region is present in the vicinity of the lower side of the abutting portion 34 located at the center in the radial direction Y of the tubular continuous body 24. It is assumed that glue scum soils the tubular continuous body 24. It is also assumed that fine powder of the web material generated along with the manufacture of the tubular continuous body 24 or dust in the air may adhere to and be cured on the glue adhering to the vicinity of the lower side of the abutting portion 34 to soil the tubular continuous body 24.

As indicated by a box in the captured image of Fig. 16, the tubular continuous body 24 is soiled in the vicinity of both the upper side and the lower side of the abutting portion 34. That is, even if determination is made that the soil in the vicinity of the upper side of the abutting portion 34 of the tubular continuous body 24 is in the permissible range in the inspection described in Fig. 7, determination may be made that the tubular continuous body 24 is defective due to the soil in the vicinity of the lower side of the abutting portion 34.

The tubular continuous body 24 having this defect is rejected from the transport section of the manufacturing device for the tubular continuous body 24 as a defective product as in the case of the inspection described in Fig. 9. When the determination result in step 43 is negative (No) and ND2 ≥ T5 does not hold true, that is, the number ND2 of second defects D2 is smaller than the fifth threshold T5, the process proceeds to step S45.

In step S45, information indicating that the tubular continuous body 24 is good is output because the tubular continuous body 24 is neither burst nor soiled or the soil is in the permissible range. Then, the inspection of the inspection region A to be inspected is terminated. In this way, every time the control unit 46 outputs the inspection start signal at the interval of the predetermined period, the inspection of each inspection region A set successively on the tubular continuous body 24 that is being transported is sequentially performed in accordance with the inspection flow.

As described above, the inspection device 40 of the embodiment inspects the tubular continuous body 24 serving as the tubular element 4 of the article 1 in the transport section. Further, the illuminator 44 illuminates the abutting portion 34 in the illumination direction intersecting the image capturing direction of the camera 42 at the angle α equal to or smaller than 90°. Therefore, defects such as the burst state or soil that may occur intermittently in the axial direction X of the tubular continuous body 24 are detected quickly and easily with the shade 52 of the abutting portion 34.

Thus, it is possible to detect and securely reject the defect of the tubular continuous body 24 at the stage of the tubular continuous body 24. Further, it is possible to implement improvement in the efficiency of inspection and the quality of the tubular continuous body 24 because the vicinity of the abutting portion 34 that is likely to have defects is inspected intensively. Specifically, when the area S of the shade 52 is equal to or larger than the first threshold T1 in the determination step S4, the determiner 50 determines that the tubular continuous body 24 is defective because the burst state of the tubular continuous body 24 occurs. Thus, the burst state of the tubular continuous body 24 can be detected efficiently.

Further, when the number ND 1 of first defects D 1 identified at the first edges E1 on the upper end side of the shade 52 in the radial direction of the tubular continuous body 24 is equal to or larger than the third threshold T3 in the determination step S4, the determiner 50 determines that the tubular continuous body 24 is defective because soil occurs due to glue scum etc. in the vicinity of the upper side of the abutting portion 34 of the tubular continuous body 24. Thus, the soil in the vicinity of the upper side of the abutting portion 34 of the tubular continuous body 24 is detected efficiently.

Further, when the number ND2 of second defects D2 identified at the second edges E2 on the lower end side of the shade 52 in the radial direction of the tubular continuous body 24 is equal to or larger than the fifth threshold T5 in the determination step S4, the determiner 50 determines that the tubular continuous body 24 is defective because soil occurs due to glue scum etc. in the vicinity of the lower side of the abutting portion 34 of the tubular continuous body 24. Thus, the soil in the vicinity of the lower side of the abutting portion 34 of the tubular continuous body 24 is detected efficiently.

In this way, the tubular continuous body 24 is inspected stepwise based on the area of the shade 52 of the abutting portion 34 and the first and second edges E1 and E2 on the upper end side and the lower end side of the shade. Therefore, defects extending or scattered in the axial direction X can be detected securely, and the tubular continuous body 24 that obviously has a defect is promptly rejected from the transport section. Thus, the efficiency of inspection of the tubular continuous body 24 can be improved, and the quality of the tubular continuous body 24 and furthermore the article 1 can be improved.

Although the description of the embodiment will end, the embodiment is not limitative and various modifications may be made without departing from the gist. For example, the tubular element 4 is a paper tube in the above embodiment, but the double web may be made of a flexible material other than the paper web as long as the double tube having the abutting portion 34 is formed from the double web.

Further, the image capturing direction of the camera 42 and the illumination direction of the illuminator 44 intersect each other at the angle α equal to or smaller than 90°. To maximize the visibility of the shade 52 and improve the inspection accuracy, the angle α ranges preferably from 45° to 90°.

### Reference Signs List

- 1: flavor inhalation article
- 4: tubular element
- 24: tubular continuous body
- 26: inner web
- 26a: outer circumferential surface
- 26b: outer circumferential edge portion
- 28: outer web
- 28a: inner circumferential surface
- 28b: inner circumferential edge portion
- 30: overlapping portion
- 32: seam bonding portion
- 34: abutting portion
- 40: inspection device
- 42: camera
- 44: illuminator
- 48: image processor
- 50: determiner
- 52: shade
- α: angle
- D1: first defect
- D2: second defect
- d1: predetermined interval
- d2: predetermined interval
- E1: first edge
- E2: second edge
- L1: first imaginary straight line
- L2: second imaginary straight line
- ND 1: number of first defects
- ND2: number of second defects
- S: area
- S 1: image capturing step
- S2: illumination step
- S3: image processing step
- S4: determination step
- T1: first threshold
- T2: second threshold
- T3: third threshold
- T4: fourth threshold
- T5: fifth threshold
- Δw1: deviation amount
- Δw2: deviation amount
- X: axial direction
- Y: radial direction

## Claims

1. An inspection device that inspects a tubular continuous body serving as a tubular element of a flavor inhalation article in a transport section,
the tubular continuous body being a double tube including
an overlapping portion where an inner web and an outer web are bonded together with a shift in a circumferential direction,
a seam bonding portion where an inner circumferential edge portion that is a region other than the overlapping portion on an inner circumferential surface of the outer web and an outer circumferential edge portion that is a region other than the overlapping portion on an outer circumferential surface of the inner web are bonded together while overlapping each other, and
an abutting portion that adjoins the seam bonding portion and where both ends of the outer web in the circumferential direction abut against each other,
the inspection device for the tubular continuous body comprising:
a camera that captures an image of the tubular continuous body at a facing position toward the abutting portion;
an illuminator that illuminates the abutting portion in an illumination direction intersecting an image capturing direction of the camera at an angle equal to or smaller than 90°;
an image processor that processes the image captured by the camera and detects a shade of the abutting portion extending in an axial direction of the tubular continuous body; and
a determiner that determines, based on the shade detected by the image processor, whether the tubular continuous body is good or defective.

2. The inspection device for the tubular continuous body according to claim 1, wherein
the image processor calculates an area of the shade, and
when the area of the shade is equal to or larger than a predetermined first threshold, the determiner determines that the tubular continuous body is defective.

3. The inspection device for the tubular continuous body according to claim 2, wherein
the image processor detects, with predetermined intervals in the axial direction, a plurality of first edges located on one end side of the shade in a radial direction of the tubular continuous body, creates a first imaginary straight line by linear approximation of the first edges, and identifies, as a first defect, the first edge in which a deviation amount in the radial direction between the first imaginary straight line and the first edge is larger than a predetermined second threshold, and
when the number of the first defects is equal to or larger than a predetermined third threshold, the determiner determines that the tubular continuous body is defective.

4. The inspection device for the tubular continuous body according to claim 3, wherein
the image processor detects, with predetermined intervals in the axial direction, a plurality of second edges located on another end side of the shade in the radial direction, creates a second imaginary straight line by linear approximation of the second edges, and identifies, as a second defect, the second edge in which a deviation amount in the radial direction between the second imaginary straight line and the second edge is larger than a predetermined fourth threshold, and
when the number of the second defects is equal to or larger than a predetermined fifth threshold, the determiner determines that the tubular continuous body is defective.

5. An inspection method for inspecting a tubular continuous body serving as a tubular element of a flavor inhalation article in a transport section,
the tubular continuous body being a double tube including
an overlapping portion where an inner web and an outer web are bonded together with a shift in a circumferential direction,
a seam bonding portion where an inner circumferential edge portion that is a region other than the overlapping portion on an inner circumferential surface of the outer web and an outer circumferential edge portion that is a region other than the overlapping portion on an outer circumferential surface of the inner web are bonded together while overlapping each other, and
an abutting portion that adjoins the seam bonding portion and where both ends of the outer web in the circumferential direction abut against each other,
the inspection method for the tubular continuous body comprising:
an image capturing step for capturing an image of the tubular continuous body at a facing position toward the abutting portion;
an illumination step for illuminating the abutting portion in an illumination direction intersecting an image capturing direction in the image capturing step at an angle equal to or smaller than 90°;
an image processing step for processing the image captured in the image capturing step and detecting a shade of the abutting portion extending in an axial direction of the tubular continuous body; and
a determination step for determining, based on the shade detected in the image processing step, whether the tubular continuous body is good or defective.

6. The inspection method for the tubular continuous body according to claim 5, wherein
in the image processing step, an area of the shade is calculated, and
in the determination step, when the area of the shade is equal to or larger than a predetermined first threshold, determination is made that the tubular continuous body is defective.

7. The inspection method for the tubular continuous body according to claim 6, wherein
in the image processing step, a plurality of first edges located on one end side of the shade in a radial direction of the tubular continuous body is detected with predetermined intervals in the axial direction, a first imaginary straight line is created by linear approximation of the first edges, and the first edge in which a deviation amount in the radial direction between the first imaginary straight line and the first edge is larger than a predetermined second threshold is identified as a first defect, and
in the determination step, when the number of the first defects is equal to or larger than a predetermined third threshold, determination is made that the tubular continuous body is defective.

8. The inspection method for the tubular continuous body according to claim 7, wherein
in the image processing step, a plurality of second edges located on another end side of the shade in the radial direction of the tubular continuous body is detected with predetermined intervals in the axial direction, a second imaginary straight line is created by linear approximation of the second edges, and the second edge in which a deviation amount in the radial direction between the second imaginary straight line and the second edge is larger than a predetermined fourth threshold is identified as a second defect, and
in the determination step, when the number of the second defects is equal to or larger than a predetermined fifth threshold, determination is made that the tubular continuous body is defective.
